# NOUVEAU FASCICULE DE BREVET EUROPEEN

(11) **EP 2 531 756 B2**
(45) Date de publication et mention de la décision concernant l'opposition: **23.04.2025**
(45) Mention de la délivrance du brevet: 14.08.2019
(21) Numéro de dépôt: 11705269.6
(22) Date de dépôt: 31.01.2011
(51) Int. Cl.: F16K 31/06

(54) **ELECTROVANNE PILOTE**
PILOTMAGNETVENTIL
PILOT SOLENOID VALVE

(30) Priorité: 02.02.2010 FR 1000398
(43) Date de publication de la demande: 12.12.2012
(73) Titulaire: ASCO SAS, 28110 Lucé (FR)
(72) Inventeur: VANDAMME, Richard, F-28300 Cintray (FR); MOREAU, Pascal, F-28630 Le Coudray (FR); GOMEZ, Jean-Pierre, F-28300 Amilly (FR)
(74) Mandataire: Cabinet Nony
(86) Numéro de dépôt international: PCT/IB2011/050415
(87) Numéro de publication internationale: WO 2011/095928

(56) Documents cités:
- DE-A1- 102007 059 054
- DE-U1- 20 205 488
- JP-A- S58 214 084
- US-A- 5 374 029

## Description

La présente invention est relative aux électrovannes miniatures couramment utilisées en pilotage de systèmes de distribution d'air comprimé à tiroir ou à clapet. Ces électrovannes miniatures agissent en multiplicateur et en contrôleur de puissance. En effet pour une faible puissance électrique d'entrée, souvent inférieure à 1W, la puissance pneumatique contrôlée de sortie est supérieure à 1kW.

Le principe de construction des électrovannes miniatures repose sur des électroaimants dont l'élément mobile peut avoir deux types de construction.

Le premier type de construction est caractérisé par un noyau de forme cylindrique, pénétrant profondément dans la partie centrale d'une bobine appartenant à l'électroaimant. Cette construction est communément appelée électrovanne à noyau plongeant.

Le deuxième type de construction est caractérisé par un noyau de forme plate, ne pénétrant pas dans la partie centrale de la bobine. Cette construction est communément appelée électrovanne à noyau mobile plat.

Dans le premier type de construction utilisant un noyau plongeant, l'état de l'art peut être illustré par le document EP 1 536 169. Cette construction se caractérise par une optimisation du flux magnétique, au détriment de la masse importante du noyau plongeant. Les forces de friction sont éliminées par l'utilisation de deux ressorts plats, servant notamment de guidage du noyau plongeant.

Dans le second type de construction utilisant un noyau mobile plat, l'état de l'art peut être illustré par le document EP 0 549 490. Cette construction se caractérise par une masse réduite du noyau mobile plat. Un ressort cylindrique sert de rappel.

DE 10 2007 059 054 divulgue une électrovanne comportant une bague de maintien en matériau magnétique, insérée dans le corps de l'électrovanne.

US 5 374 029 décrit une électrovanne comportant un noyau mobile à l'intérieur d'une bague en matériau magnétique, servant au rebouclage du flux magnétique. Une bague non magnétique s'interpose entre la bobine et cette bague magnétique.

La distance parcourue par le noyau mobile plat entre ses deux positions stables est appelée course.

Notons que dans chacune de ces deux constructions, il existe deux entrefers principaux :
- l'entrefer situé perpendiculairement à l'axe principal de l'électrovanne. Cet entrefer est moteur. Il détermine directement la course du noyau et par conséquent le débit de la vanne. Il convient donc de maîtriser les dispersions au niveau de cet entrefer.
- l'entrefer situé radialement à l'axe principal de l'électrovanne. Cet entrefer n'est pas moteur. Il est cependant nécessaire pour permettre le mouvement du noyau dans son logement. Il convient également
   de maîtriser cet entrefer afin de limiter son impact sur le bouclage du flux magnétique de l'électroaimant.

Dans les deux types de construction, la course du noyau dépend des dimensions d'un nombre important de pièces, mais aussi de la variabilité des points de fonctionnement des ressorts en fonction des caractéristiques des forces magnétiques de l'électroaimant. Il devient alors très difficile de produire des électrovannes miniatures avec une valeur de débit reproductible, et de garantir une faible puissance absorbée.

La présente invention a pour but, notamment de proposer une électrovanne miniature de faible puissance absorbée, dont l'élément mobile peut être assimilé à un noyau mobile plat et dont la course et la force de rappel de ce noyau mobile plat puissent être mieux maîtrisés, afin que la valeur du débit soit reproductible.

Selon l'invention, l'électrovanne comprend toutes les caractéristiques de la revendication 1.

De manière avantageuse le ressort plat, associé à une bague de maintien, permet le réglage d'une force de pré-charge servant à étancher un orifice d'alimentation lorsque la vanne est en position repos, cela indépendamment du réglage de la course du noyau mobile plat.

Le réglage de la course du noyau mobile plat peut être obtenu lors de la mise en place du sous-ensemble constitué de la bobine et du noyau fixe.

L'orifice d'alimentation et le ou les orifice(s) d'utilisation peuvent être réalisés dans la partie basse du corps.

La bague de maintien peut permettre le centrage du noyau fixe.

L'orifice d'alimentation et le ou les orifice(s) d'utilisation peuvent être réalisés dans le fond, solidaire du corps.

La carcasse de la bobine peut posséder plusieurs bossages.

Le clapet peut posséder une forme polygonale.

Le clapet peut être de forme cylindrique, un épaulement dans le noyau mobile plat faisant alors office de retenue.

Le clapet peut posséder un épaulement.

Un ressort conique peut être inséré entre l'épaulement du clapet et l'épaulement du noyau mobile plat.

Une rondelle de centrage, en association avec le ressort plat de pré charge, peut permettre de centrer et guider le noyau mobile plat, tout en limitant les frottements de par la très faible épaisseur de la rondelle de centrage.

Cette rondelle de centrage peut être remplacée par un second ressort plat, de faible raideur, pré-contraint par l'intermédiaire d'un épaulement dans le corps permettant d'assurer au noyau mobile plat, en association avec le ressort plat de rappel, un guidage sans aucun frottement, ni avec le corps, ni avec toute autre pièce interne.

Le noyau mobile plat et le noyau fixe peuvent avoir une zone proche de l'entrefer dont la géométrie est de forme étagée.

Le diamètre extérieur du noyau mobile plat peut être réduit de façon à limiter sa masse et en ce que ledit noyau mobile plat dispose d'un bourrelet en remplacement de la rondelle de guidage.

La fonction de centrage du noyau mobile plat est alors obtenue, non pas par une rondelle de centrage, mais par le bourrelet réalisé directement sur le diamètre extérieur du noyau mobile plat.

La forme externe de la section du corps peut être tronquée sur au moins deux faces opposées, formant ainsi des méplats.

L'étanchéité du circuit fluidique de l'électrovanne par rapport à l'extérieur peut être obtenue, suivant la construction, par des joints toriques intégrés à l'électrovanne pilote, ou par des garnitures faisant partie intégrante de l'appareil ou du dispositif recevant l'électrovanne pilote.

De manière avantageuse, tous les canaux fluidiques reliant l'électrovanne aux dispositifs externes, sont rectilignes et ne présentent donc pas de changement brutal de direction du fluide, d'où l'absence de pertes de charge localisées additionnelles, de la sorte le débit d'air est maximum pour une faible différence de pression.

Le noyau mobile plat utilisé possède une forme particulière permettant de réaliser une caractéristique de force en fonction de la position adoptée, par l'influence des paramètres géométriques des entrefers. Cette forme permet de réduire l'entrefer magnétique sans changer la course utile et de modifier la caractéristique d'attraction de ce noyau mobile plat.

L'optimisation de la force dynamique résultante est aussi obtenue en diminuant le plus possible le volume, donc la masse, du noyau mobile plat. La variabilité des points de fonctionnement du ressort plat est limitée par un réglage « in situ » de celui-ci, garantissant la valeur de la faible puissance absorbée.

L'électrovanne miniature selon l'invention peut inclure également une structure monobloc du corps liant la partie électromagnétique à la partie fluidique, ici pneumatique. De la sorte, plusieurs fonctions principales de l'électrovanne sont réalisées en une seule pièce, permettant de limiter le nombre de composants et de réduire les dispersions d'assemblages. Cette optimisation peut donc avoir un impact non négligeable sur le coût du produit.

Dans ce type de construction, le débit de l'orifice d'alimentation est directement contrôlé par la position du noyau mobile plat élément du système électromagnétique et pneumatique.

D'autres caractéristiques et avantages de l'invention apparaîtront dans la description qui suit d'un mode de réalisation préféré avec référence aux dessins annexés mais qui n'a aucun caractère limitatif.

Sur ces dessins :
Fig. 1 est une coupe longitudinale selon le plan B-B d'une électrovanne hors tension selon l'invention,
Fig. 2 est une coupe longitudinale selon le plan A-A d'une électrovanne hors tension selon l'invention,
Fig. 3 est une coupe longitudinale de l'électrovanne de Fig. 2 sous tension,
Fig. 4 est un détail illustrant la constitution de la bobine de l'électrovanne de Fig. 1,
Fig. 5 est un détail illustrant le sous-ensemble bobine de l'électrovanne de Fig. 1,
Fig. 6 est un détail illustrant l'assemblage du sous-ensemble bobine de Fig. 5,
Fig. 6b est un détail illustrant des bossages intégrés à l'alésage principal de la carcasse définie Fig. 4.
Fig. 6c est une coupe longitudinale selon le plan A-A de Fig. 6b.
Fig. 7 illustre un mode de réalisation alternatif de la forme du noyau mobile plat de l'électrovanne de Fig. 1,
Fig. 7b illustre un mode de réalisation alternatif de la forme du noyau mobile plat de l'électrovanne de Fig. 1,
Fig. 8 est une vue en perspective d'un clapet utilisé dans l'électrovanne de Fig. 1,
Fig. 9 est une coupe longitudinale selon le plan A-A du clapet selon Fig. 8, inséré dans le noyau mobile plat de l'électrovanne de Fig. 1,
Fig. 9b illustre un mode de réalisation alternatif de la forme du clapet illustré Fig. 9 de l'électrovanne de Fig. 1,
Fig. 9c illustre un autre mode de réalisation alternatif de la forme du clapet illustré Fig. 9 de l'électrovanne de Fig. 1,
Fig. 9d illustre la présence d'un ressort conique entre le clapet illustré Fig. 9 et le noyau de l'électrovanne de Fig. 1,
Fig. 10 est une coupe longitudinale selon le plan B-B du clapet monté dans le noyau mobile plat, selon

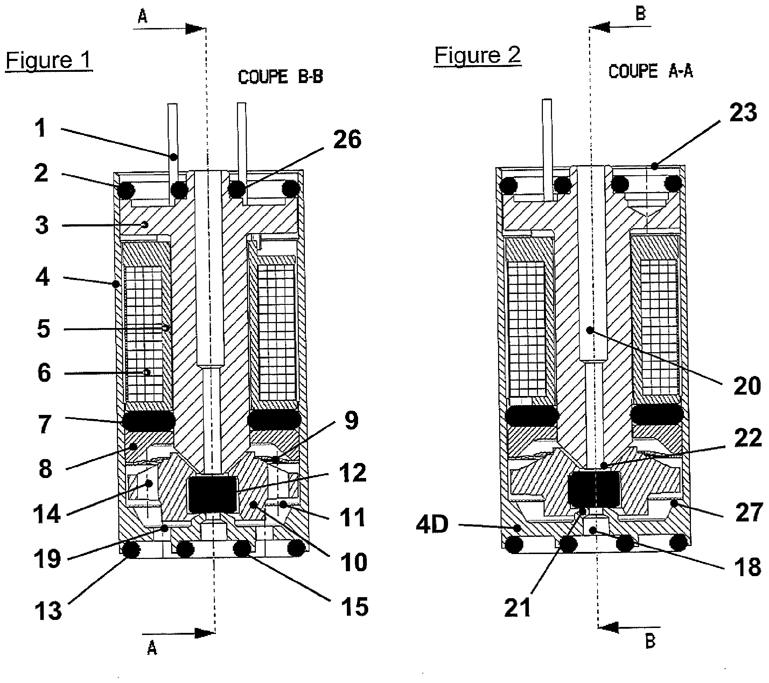

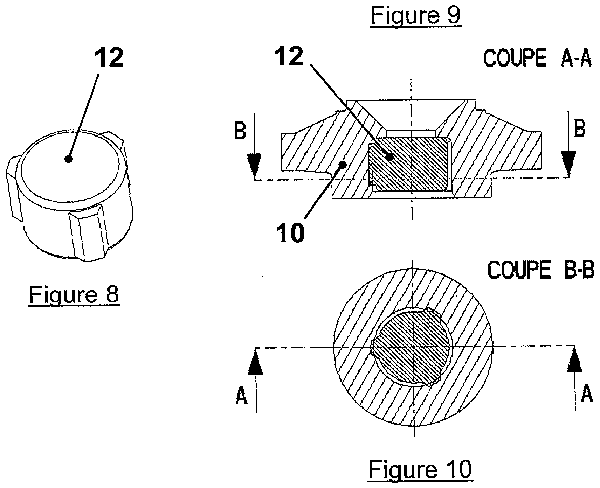

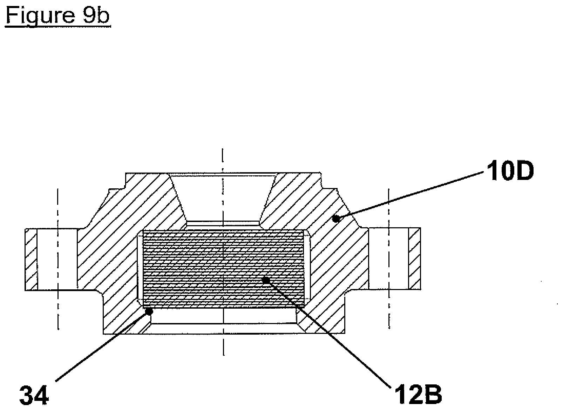

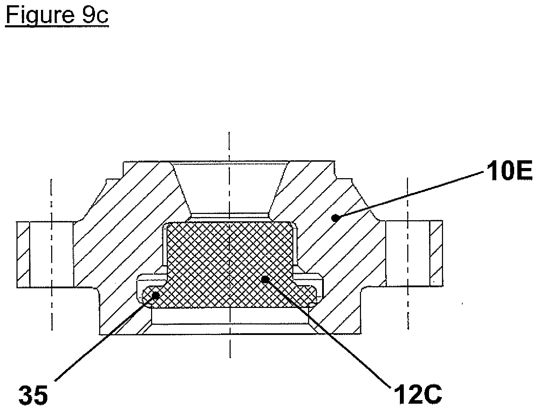

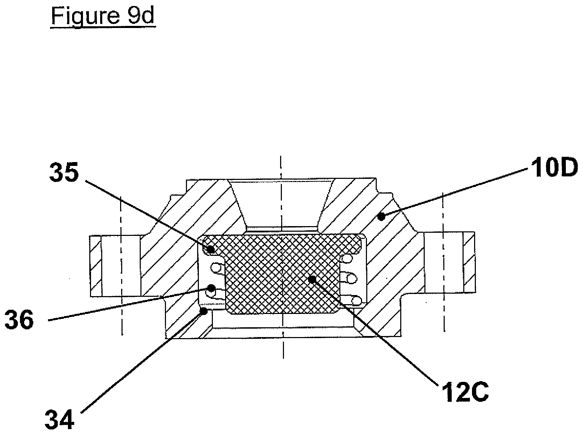

Fig. 9, inséré dans le noyau mobile plat de l'électrovanne de Fig. 1,

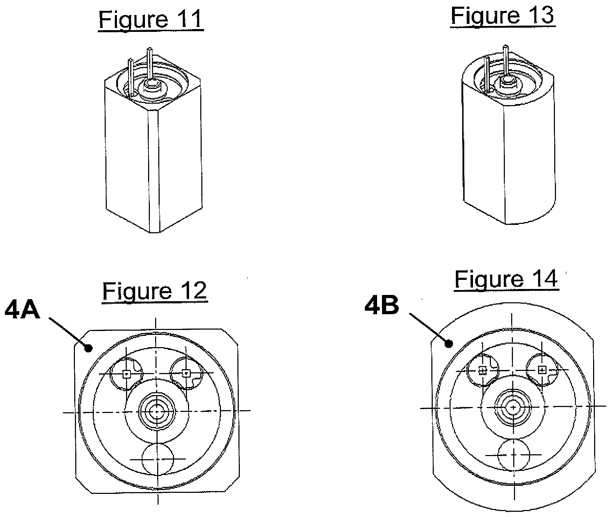

Fig. 11 est une vue en perspective d'un premier mode de réalisation du corps de l'électrovanne de Fig. 1,
Fig. 12 est une vue de dessus de Fig. 11,
Fig. 13 est une vue en perspective d'un second mode de réalisation du corps de l'électrovanne de Fig. 1,
Fig. 14 est une vue de dessus de Fig. 13,

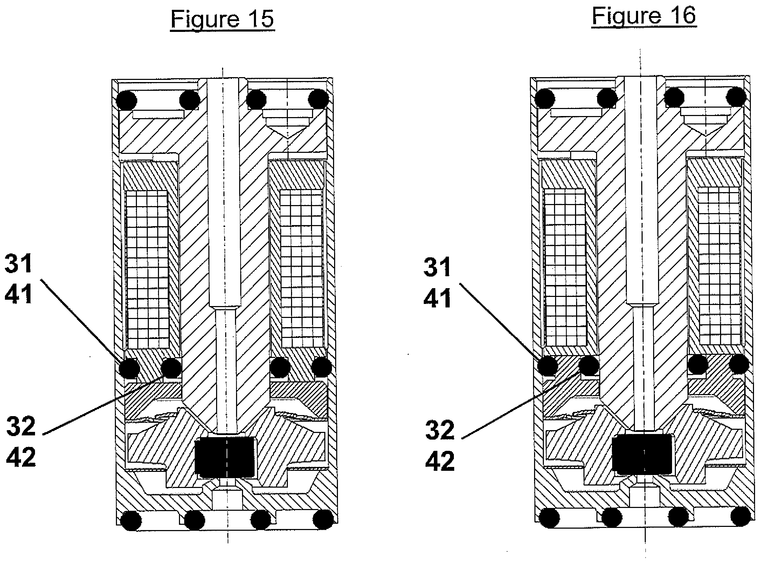

Fig. 15 et 16 sont des coupes similaires à Fig. 2 illustrant des solutions alternatives d'étanchéité interne,

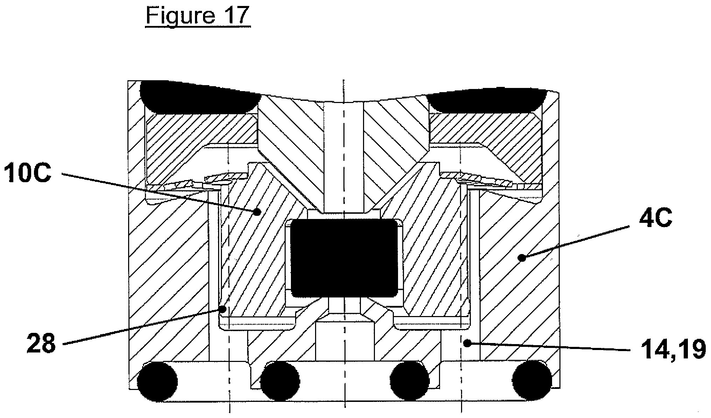

Fig. 17 illustre un mode de réalisation alternatif de la forme du corps et du noyau mobile plat de l'électrovanne de Fig. 1,

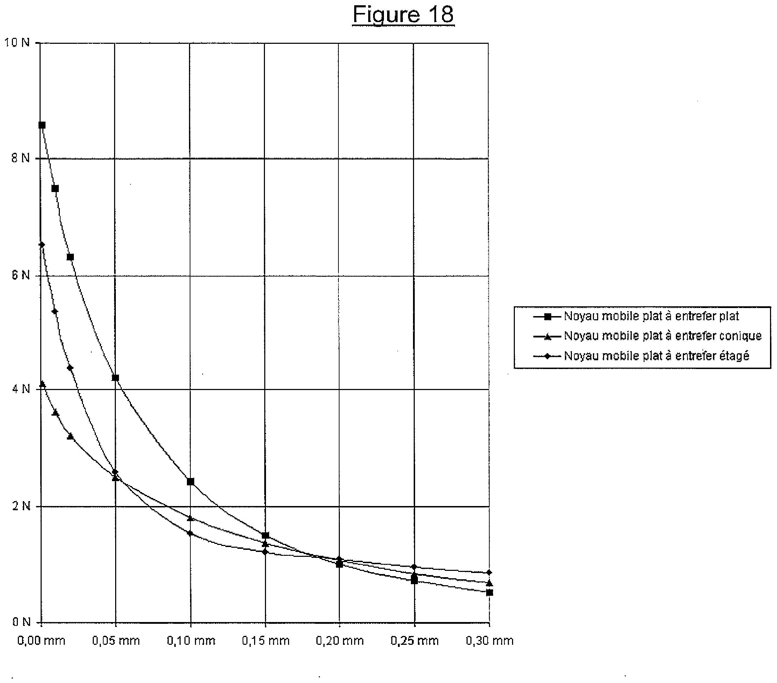

Fig. 18 est une courbe schématique représentant l'influence de la forme de l'entrefer magnétique sur la courbe d'attraction du noyau mobile plat, et

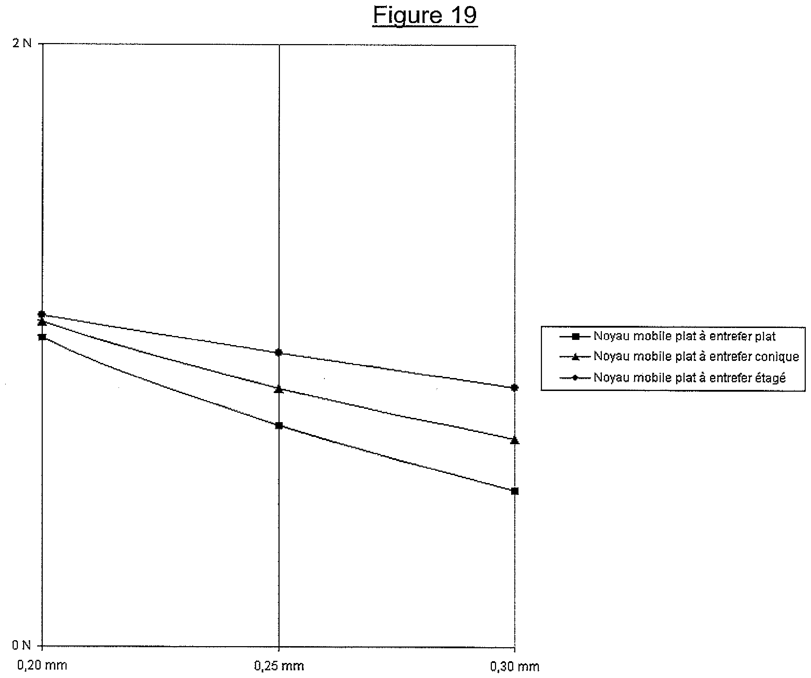

Fig. 19 est un agrandissement de Fig. 18, dans la zone proche de l'entrefer de travail.

On peut voir Figures 1 et 2 une électrovanne selon l'invention.

La partie magnétique de l'électrovanne permettant le bouclage du flux magnétique généré par la bobine 17, est composé d'un corps 4, d'un noyau fixe 3 et d'un noyau mobile plat 10 réalisés en matériau ferromagnétique.

Le noyau mobile plat 10 se déplace suivant l'axe principal de l'électrovanne entre le noyau fixe 3 et la partie basse du corps 4.

Le noyau mobile plat 10 qui se déplace suivant l'axe principal de l'électrovanne est soumis à une force de rappel élastique due au ressort plat 9. Cette force ajustable au montage est appelé pré-charge.

La partie fluidique de l'électrovanne est composée du corps 4, du noyau fixe 3 et du noyau mobile plat 10 comportant un clapet à double face 12. La partie fluidique de l'électrovanne permet le contrôle des débits d'air à partir de l'orifice d'alimentation 18 vers le ou les orifice(s) d'utilisation 19 ou à partir du ou des orifice(s) d'utilisation 19 vers l'orifice d'échappement 20. Une construction alternative consiste à ne contrôler le passage du fluide qu'entre les orifices d'alimentation 18 et d'utilisation 19.

L'étanchéité du circuit fluidique de l'électrovanne est obtenue d'une part par un joint oblong 7 emprisonné entre la carcasse de bobine 5 et une bague de maintien 8 assurant l'étanchéité interne, et d'autre part par les quatre joints toriques 2, 13, 15 et 26 assurant l'étanchéité externe.

Cette fonction d'étanchéité externe peut également être réalisée par une ou plusieurs garnitures externes (non représentées), faisant partie intégrante de l'appareil ou du dispositif recevant l'électrovanne pilote, et remplaçant de ce fait un ou plusieurs joints toriques 2, 13, 15 et 26.

Notons que la bague de maintien 8 est en matériau non magnétique de manière à ne pas influer sur les caractéristiques du champ magnétique.

L'orifice d'alimentation 18 et le ou les orifice(s) d'utilisation 19 sont réalisés dans la partie basse du corps 4 appelée fond 4D. Contrairement au mode de réalisation généralement adopté dans l'art antérieur, le fond 4D est solidaire du corps 4. Ceci permet notamment de limiter les dispersions d'assemblage et par ce fait, de réaliser un réglage plus précis de la position de la bague 8 et de la course du noyau mobile plat 10.

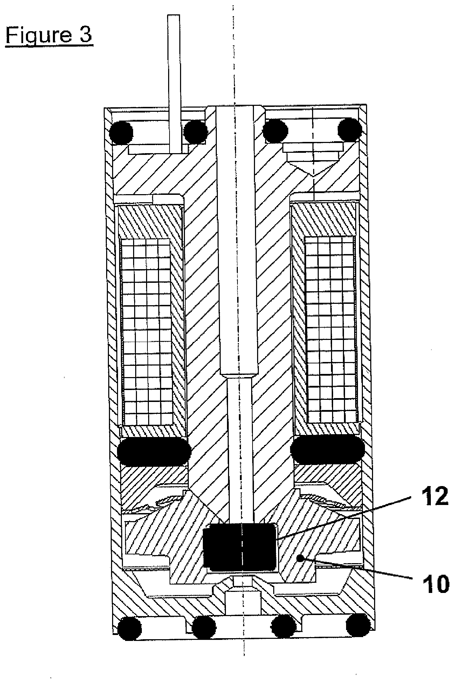

La Figure 3 illustre l'électrovanne sous tension. Le noyau 10 muni du clapet 12 est alors en position haute, et en butée sur le noyau fixe 3. De la sorte l'orifice d'échappement 20 est obturé par l'action du clapet 12 sur le siège 22.

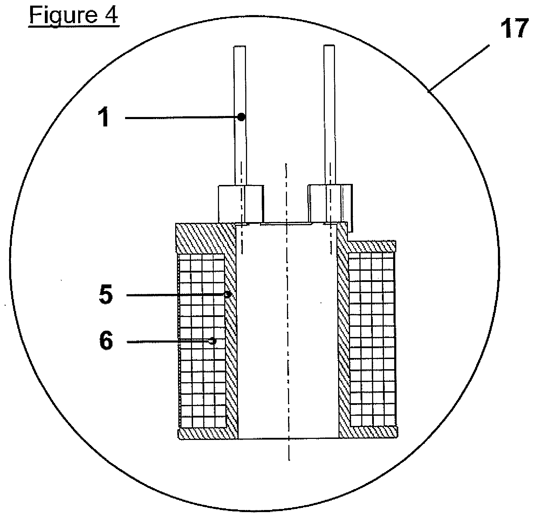

On peut voir Figure 4 la constitution de la bobine 17. La bobine 17 est composée d'une carcasse de bobine 5, d'un bobinage 6 et de deux picots de connexion électrique 1.

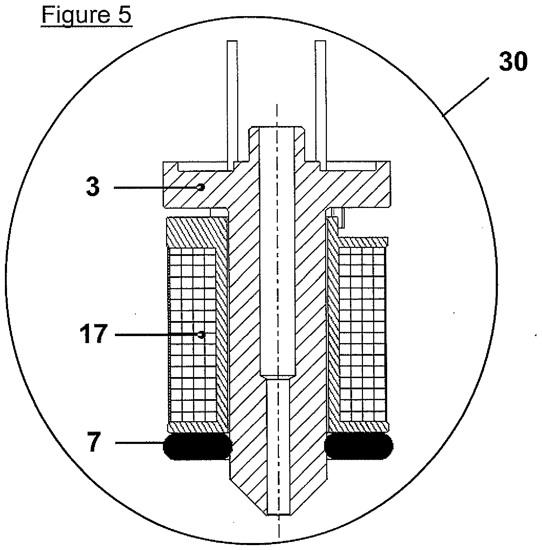

La bobine 17, un joint oblong 7 et le noyau fixe 3 forment un sous-ensemble bobine 30 dont la constitution est plus particulièrement illustrée Figure 5. La bobine 17 est glissée le long de l'axe du noyau fixe 3 jusqu'à venir en butée sur celui-ci. Le joint oblong 7 est monté sur le noyau fixe 3 de façon à retenir la bobine 17 sur le noyau fixe 3.

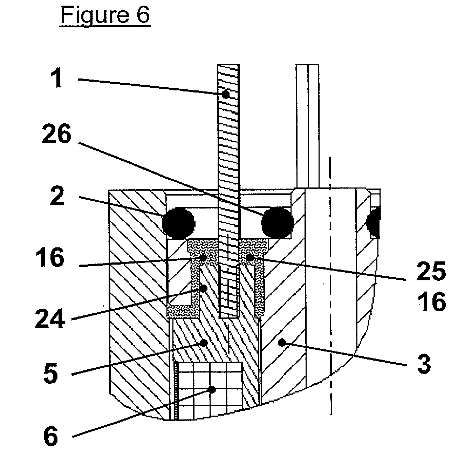

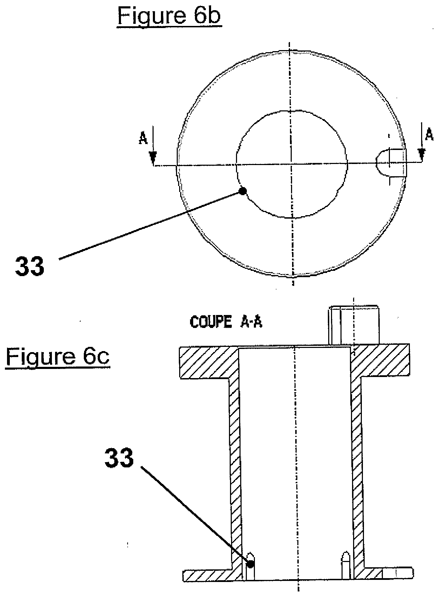

La zone de connexion du sous-ensemble bobine 30 est plus particulièrement visible Figure 6. Les picots de connexion 1 ainsi que leurs supports 24 prévus dans la carcasse de bobine 5 passent à travers le noyau fixe 3 par l'intermédiaire de deux trous de passage 25 prévus à cet effet. Une résine 16 peut être injectée entre le noyau fixe 3 et la carcasse de bobine 5, afin de solidariser la bobine 17 et le noyau fixe 3. Cette opération s'effectue après insertion du sous-ensemble bobine 30 dans le corps 4.

Une alternative à l'utilisation de la résine 16 consiste à intégrer plusieurs bossages 33 dans l'alésage principal de la carcasse 5, tel que décrit en Figures 6b et 6c, de façon à ce que le noyau fixe 3 soit monté sous contrainte dans la bobine 17.

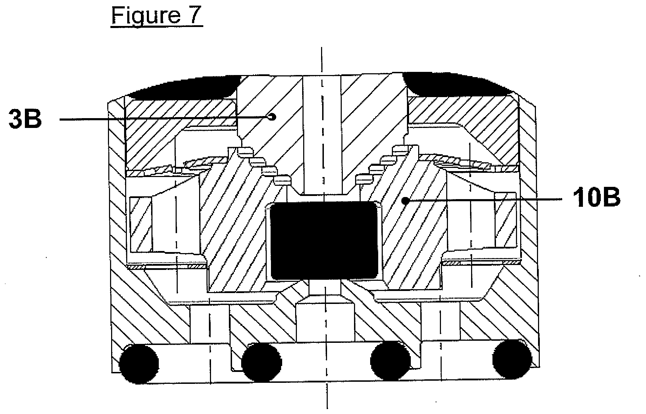

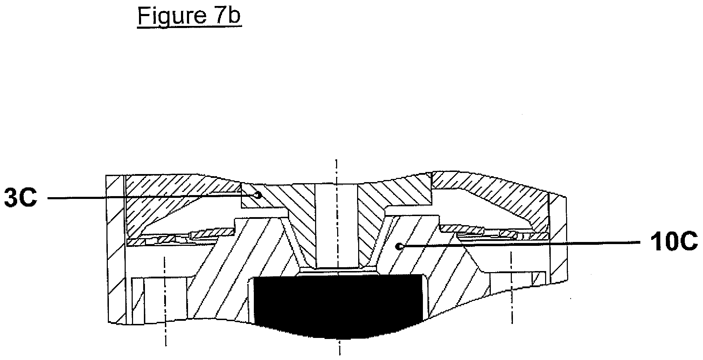

La Figure 7 illustre un mode de réalisation alternatif 10B de la forme du noyau mobile plat 10. Le but est ici de réaliser une caractéristique de force magnétique particulière entre le noyau mobile plat 10B et l'extrémité du noyau fixe 3B. Dans cet objectif on utilise des géométries particulières dans les zones proches de l'entrefer moteur. En comparaison avec un entrefer moteur plat classique et au voisinage de la position repos, le flux magnétique est en effet plus marqué pour une forme conique (Figure 1) ou étagée (Figure 7), permettant une caractéristique d'attraction identique pour une consommation d'énergie électrique réduite. En d'autres termes, le rendement le l'électroaimant au voisinage de l'entrefer de travail est plus élevé en utilisant l'une ou l'autre de ces deux géométries.

Il n'est pas exclu, de réaliser partiellement l'une ou l'autre de ces deux géométries d'entrefer, en combinaison avec une partie plate classique, dans le but d'obtenir un juste compromis entre faisabilité, fiabilité et performances du produit. Une combinaison d'entrefer conique et plat appliquée au noyau mobile plat 10C et au noyau fixe 3C est illustrée en Figure 7b.

L'insertion du clapet 12, illustré en Figure 8, dans le noyau mobile plat 10 est plus particulièrement illustrée en Figures 9 et 10. Ce clapet 12 de forme polygonale est inséré dans un perçage circulaire du noyau mobile plat 10. Cette forme particulière, polygonale, insérée dans un trou circulaire permet avantageusement de maintenir le clapet dans son logement, tout en prévenant toute déformation des surfaces portantes sur les sièges 21, 22 et en assurant le dégagement de toutes bavures relatives à la fermeture du moule du clapet.

De façon plus classique, le clapet 12B peut être de forme cylindrique, un épaulement 34 dans le noyau mobile plat 10D faisant alors office de retenue. Cette option est illustrée en Figure 9b.

Une autre géométrie du clapet 12C, faisant apparaître un épaulement 35, peut également être réalisée, de façon à obtenir une plus grande flexibilité du clapet 12C à l'intérieur du noyau mobile plat 10E, permettant de favoriser le contact entre le noyau mobile plat 10E et le noyau fixe 3 lorsque la bobine 17 est sous tension. Cette option est illustrée en Figure 9c.

Il est également possible d'insérer sous contrainte un ressort conique 36 entre l'épaulement 35 du clapet 12C et l'épaulement 34 du noyau mobile plat 10D. Cette alternative est illustrée en Figure 9d.

La conception de l'électrovanne permet le montage de tous les constituants internes par l'arrière du corps 4, par l'intermédiaire d'une ouverture 23 notamment apte à l'insertion du noyau mobile plat 10, du noyau fixe 3 et de la bobine 17. La conception de l'électrovanne permet également l'indépendance des réglages de la course et de la pré-charge. Le montage des différents éléments de l'électrovanne est explicité ci-après.

La rondelle de centrage 11 et l'ensemble noyau mobile plat 10, 12 sont placés dans la partie basse du corps 4. Le ressort plat 9 est alors ensuite inséré et vient au contact de l'ensemble noyau mobile plat 10, 12.

La bague de maintien 8 est insérée dans le corps 4 jusqu'au contact avec le ressort plat 9. Le ressort plat 9 exerce la pré-charge sur l'ensemble noyau mobile plat 10, 12 et l'ensemble noyau mobile plat 10, 12 vient en contact de l'orifice d'alimentation 18. L'effort de pré-charge est alors vérifié par un moyen adéquat.

Lorsque la position de la bague de maintien 8 est telle que l'effort de pré-charge atteint une valeur correcte prédéfinie, la bague de maintien 8 est sertie sur le corps 4.

Le sous-ensemble bobine 30 est ensuite inséré dans le corps 4 jusqu'à une position telle que la course atteint une valeur satisfaisante. Lors de cette opération la valeur de la course est vérifiée par alternance de prises de positions entre la position repos, bobine non alimentée, et la position actionnée, bobine alimentée, de telle sorte que la course soit définie avec une précision de l'ordre de quelques dizaines de micromètres.

La bague de maintien 8 a également pour fonction de centrer la partie basse du noyau fixe 3, par rapport au noyau mobile plat 10, lors de l'insertion du sous-ensemble bobine 30 dans le corps 4.

Le corps 4 et le sous-ensemble bobine 30 sont alors sertis au travers du noyau fixe 3 en partie haute de l'électrovanne.

En position repos, bobine non alimentée, l'orifice d'alimentation 18 est obturée par le clapet 12, grâce à la pré-charge exercée par le ressort plat 9 sur le noyau mobile plat 10 permettant de maintenir un effort sur le siège 21 de l'orifice d'alimentation 18, nécessaire pour assurer l'isolation de cette dernière par rapport aux autres orifices 19 et 20. Le ou les orifice(s) d'utilisation 19 et l'orifice d'échappement 20 sont alors en liaison, par l'intermédiaire d'un ou plusieurs orifice(s) de liaison 14 du noyau mobile plat 10. Notons que le ressort plat 9 ainsi que la rondelle de centrage 11 sont suffisamment ajourées pour ne pas perturber le passage du fluide.

En position actionnée, bobine alimentée, le noyau mobile plat 10 est attiré magnétiquement par le noyau fixe 3 jusqu'au contact entre ces deux pièces, appelé collage. L'orifice d'échappement 20 est alors obturé par le clapet 12. La pression exercée sur ce dernier par l'air comprimé provenant de l'orifice d'alimentation 18 permet de maintenir un effort sur le siège 22 de l'orifice d'échappement 20, nécessaire pour assurer l'isolation de cette dernière par rapport aux autres orifices 18 et 19. L'orifice d'alimentation 18 et le ou les orifice(s) d'utilisation 19 sont alors en liaison.

Les Figures 11 à 14 illustrent des exemples de réalisation du corps 4, dont les faces latérales peuvent être tronquées sur deux faces opposées (Figures 13 et 14) ou sur quatre faces (Figures 11 et 12). Les faces latérales deviennent alors des méplats. La réduction localisée de l'épaisseur du corps 4 ainsi provoquée permet l'optimisation des opérations de sertissage du sous-ensemble bobine 30 et du corps 4 ainsi que de la bague de maintien 8 avec ce même corps 4, tout en maintenant une section nécessaire et suffisante de matériau magnétique dans les zones épaisses afin d'assurer la circulation du flux magnétique sans saturation. Ces modes de réalisation permettent également de limiter l'encombrement latéral du produit dans au moins une direction.

Les Figures 15 et 16 illustrent des modes de réalisation alternatifs relatifs à l'utilisation du joint 7 de forme oblongue, assurant l'étanchéité interne du produit. Ce joint oblong 7 est alors remplacé par deux joints toriques 31 et 32, dont les logements respectifs 41 et 42 sont réalisés soit dans la carcasse de bobine 5 (Figure 15), soit dans la bague de maintien 8 (Figure 16).

La Figure 17 illustre un mode de réalisation alternatif 4C du corps 4 et 10C du noyau mobile plat 10. Dans ce mode de réalisation, le diamètre extérieur du noyau mobile plat 10C est réduit, afin de limiter davantage l'impact de la masse de ce noyau mobile plat 10C sur les performances du produit. La rondelle de guidage 11 est alors supprimée et la fonction de guidage du noyau mobile plat 10C est alors remplacée par un bourrelet 28, réalisé sur le noyau mobile plat 10C. Ce bourrelet 28 est dimensionné de façon à limiter au maximum les frottements entre le noyau mobile plat 10C et le corps 4C. Dans ce mode de réalisation, le ou les orifice(s) de liaison 14, 19 sont réalisés dans le corps 4C.

La Figure 18 illustre l'influence de la géométrie de l'entrefer sur la courbe d'attraction du noyau mobile plat. L'effort d'attraction est représenté en ordonnée tandis que l'entrefer est indiqué en abscisse. Trois géométries sont considérées : un noyau mobile plat à entrefer plat, un noyau mobile plat à entrefer conique, un noyau mobile plat à entrefer étagé.

Dans la solution utilisant un noyau mobile plat à entrefer plat, en dehors du cas très particulier d'une valeur d'entrefer extrêmement faible, il n'y pas de saturation avant le collage. La courbe représentative de l'effort d'attraction a la forme d'une branche d'hyperbole. La force d'attraction est très importante au collage, mais faible à l'entrefer de travail (position repos).

Dans la solution utilisant un noyau mobile plat à entrefer conique, le niveau de flux magnétique de la partie conique est presque indépendant de l'écart de l'entrefer. La conséquence de cet effet est que la force d'attraction est pratiquement constante tout au long de la course et que la variation globale de la force d'attraction entre le collage et l'entrefer maximum est diminuée de moitié par rapport à la solution utilisant un noyau mobile plat à entrefer plat. En contrepartie, si l'on considère un entrefer de travail de 0.25 mm, la force d'attraction du noyau est supérieure d'environ 18% à celle d'un noyau mobile plat à entrefer plat.

Dans la solution utilisant un noyau mobile plat à entrefer étagé, on obtient également une force d'attraction pratiquement constante pour environ 50% de la course. Mais la répartition différente du flux magnétique des échelons formant l'étagement du noyau, conduit, pour les entrefers très faibles, à une augmentation de la force de collage. La force d'attraction lors du collage reste néanmoins inférieure au cas d'une solution utilisant un noyau mobile plat à entrefer plat. Cependant, l'intérêt majeur de cette solution est de présenter un gain d'effort d'environ 33% par rapport à la solution d'un noyau mobile plat à entrefer plat, en considérant également un entrefer de travail de 0.25 mm.

## Revendications

1. Electrovanne comprenant un électroaimant (17, 4, 3, 10), composé d' un noyau mobile plat (10), d'un noyau fixe (3) et d'une bobine (17), comportant un corps (4), appartenant également à l'électroaimant et comprenant une ouverture (23), située à l'arrière du corps (4) à l'opposé de l'orifice d'alimentation (18), apte à l'insertion du noyau mobile plat (10), du noyau fixe (3) et de la bobine (17),
l'électrovanne comportant également une bague de maintien (8) réalisée en matériau non magnétique et un ressort plat (9), **caractérisée en ce que** le corps (4) est solidaire de la bague de maintien (8), la bague de maintien (8) étant sertie sur le corps (4) , et **en ce que** le ressort plat (9) est comprimé entre la bague de maintien (8) et le noyau mobile plat (10).

2. Electrovanne suivant la revendication 1, **caractérisée en ce que** le ressort plat (9), associé à la bague de maintien (8), permet le réglage d'une force de pré-charge servant à étancher un orifice d'alimentation (18) lorsque la vanne est en position repos, cela indépendamment du réglage de la course du noyau mobile plat (10).

3. Electrovanne suivant la revendication 1 ou 2, **caractérisée en ce que** le réglage de la course du noyau mobile plat (10) est obtenu lors de la mise en place de la bobine (17) et du noyau fixe (3).

4. Electrovanne selon l'une quelconque des revendications précédentes, **caractérisée en ce que** la bague de maintien (8) permet le centrage du noyau fixe (3).

5. Electrovanne selon l'une quelconque des revendications précédentes, **caractérisée en ce que** l'orifice d'alimentation (18) et le ou les orifice(s) d'utilisation (19) sont réalisés dans le fond (4D), solidaire du corps (4).

6. Electrovanne selon l'une quelconque des revendications précédentes, **caractérisée en ce que** la carcasse (5) de la bobine (17) possède plusieurs bossages (33).

7. Electrovanne selon l'une quelconque des revendications précédentes, **caractérisée en ce que** le clapet (12) de l'électrovanne possède une forme polygonale.

8. Electrovanne selon l'une quelconque des revendications précédentes, **caractérisée en ce que** le clapet (12B) de l'électrovanne est de forme cylindrique, un épaulement (34) dans le noyau mobile plat (10D) faisant alors office de retenue.

9. Electrovanne selon l'une quelconque des revendications précédentes, **caractérisée en ce que** le clapet (12C) de l'électrovanne possède un épaulement (35).

10. Electrovanne selon les revendications 8 et 9, **caractérisée en ce qu'**un ressort conique (36) est inséré entre l'épaulement (35) du clapet (12C) et l'épaulement (34) du noyau mobile plat (10D).

11. Electrovanne selon l'une quelconque des revendications précédentes, **caractérisée en ce que** le noyau mobile plat (10) et le noyau fixe (3) comportent, au voisinage de l'entrefer, une zone de forme étagée.

12. Electrovanne selon l'une quelconque des revendications précédentes, **caractérisée en ce que** le diamètre extérieur du noyau mobile plat (10) est réduit de façon à limiter sa masse et **en ce que** ledit noyau mobile plat (10) dispose d'un bourrelet (28) en remplacement d'une rondelle de guidage (11) de l'électrovanne.

13. Electrovanne selon l'une quelconque des revendications précédentes, **caractérisée en ce que** la forme externe de la section du corps (4) est tronquée sur au moins deux faces opposées, formant ainsi des méplats.

14. Electrovanne selon l'une quelconque des revendications précédentes, **caractérisée en ce que** tous les canaux fluidiques (18), (19), (20) reliant l'électrovanne aux dispositifs externes, sont rectilignes.

## Patentansprüche

1. Magnetventil mit einem Elektromagneten (17, 4, 3, 10), der aus einem beweglichen flachen Kern (10), einem feststehenden Kern (3) und einer Spule (17) besteht, umfassend einen Körper (4), der ebenfalls zum Elektromagneten gehört und eine auf der Rückseite des Körpers (4) und entgegengesetzt zum Eingangsanschluss (18) gelegene Öffnung (23) umfasst, die zum Einsetzen des beweglichen flachen Kerns (10), des festen Kerns (3) und der Spule (17) geeignet ist,
wobei das Magnetventil auch einen Haltering (8), der aus einem nicht magnetischen Material ausgeführt ist, und eine Flachfeder (9) umfasst, **dadurch gekennzeichnet, dass** der Körper (4) fest mit dem Haltering (8) verbunden ist, wobei der Haltering (8) auf den Körper (4) aufgepresst ist, und dass die Flachfeder (9) zwischen dem Haltering (8) und dem beweglichen flachen Kern (10) zusammengedrückt ist.

2. Magnetventil nach Anspruch 1, **dadurch gekennzeichnet, dass** die Flachfeder (9), die dem Haltering (8) zugeordnet ist, das Einstellen einer Vorspannkraft ermöglicht, die dazu dient, einen Eingangsanschluss (18) abzudichten, wenn das Ventil in der Ruhestellung ist, und dies unabhängig von der Einstellung des Weges des beweglichen flachen Kerns (10).

3. Magnetventil nach Anspruch 1 oder 2, **dadurch gekennzeichnet, dass** das Einstellen des Weges des beweglichen flachen Kerns (10) beim Einsetzen der Spule (17) und des feststehenden Kerns (3) erhalten wird.

4. Magnetventil nach einem der vorhergehenden Ansprüche, **dadurch gekennzeichnet, dass** der Haltering (8) das Zentrieren des feststehenden Kerns (3) ermöglicht.

5. Magnetventil nach einem der vorhergehenden Ansprüche, **dadurch gekennzeichnet, dass** der Eingangsanschluss (18) und der oder die Arbeitsanschlüsse (19) in dem fest mit dem Körper (4) verbundenen Boden (4D) ausgeführt sind.

6. Magnetventil nach einem der vorhergehenden Ansprüche, **dadurch gekennzeichnet, dass** das Gehäuse (5) der Spule (17) mehrere Erhebungen (33) aufweist.

7. Magnetventil nach einem der vorhergehenden Ansprüche, **dadurch gekennzeichnet, dass** der Dichtkörper (12) des Magnetventils eine polygonale Form aufweist.

8. Magnetventil nach einem der vorhergehenden Ansprüche, **dadurch gekennzeichnet, dass** der Dichtkörper (12B) des Magnetventils zylindrisch ist, wobei eine Schulter (34) im beweglichen flachen Kern (10D) als Rückhaltung fungiert.

9. Magnetventil nach einem der vorhergehenden Ansprüche, **dadurch gekennzeichnet, dass** der Dichtkörper (12C) des Magnetventils eine Schulter (35) aufweist.

10. Magnetventil nach den Ansprüchen 8 und 9, **dadurch gekennzeichnet, dass** eine Kegelfeder (36) zwischen der Schulter (35) des Dichtkörpers (12C) und der Schulter (34) des beweglichen flachen Kerns (10D) eingesetzt ist.

11. Magnetventil nach einem der vorhergehenden Ansprüche, **dadurch gekennzeichnet, dass** der bewegliche flache Kern (10) und der feststehende Kern (3) in der Nähe des Spaltes einen gestuften Bereich umfassen.

12. Magnetventil nach einem der vorhergehenden Ansprüche, **dadurch gekennzeichnet, dass** der Außendurchmesser des beweglichen flachen Kerns (10) reduziert ist, so dass seine Masse begrenzt ist, und dass der bewegliche flache Kern (10) über einen Wulst (28) als Ersatz für eine Führungsscheibe (11) des Magnetventils verfügt.

13. Magnetventil nach einem der vorhergehenden Ansprüche, **dadurch gekennzeichnet, dass** die äußere Form des Querschnitts des Körpers (4) auf mindestens zwei entgegengesetzten Seiten abgeschnitten ist, so dass Abflachungen gebildet werden.

14. Magnetventil nach einem der vorhergehenden Ansprüche, **dadurch gekennzeichnet, dass** alle Medienkanäle (18), (19), (20), die das Magnetventil mit externen Vorrichtungen verbinden, geradlinig sind.

## Claims

1. Solenoid valve comprising an electromagnet (17, 4, 3, 10) consisting of a flat moveable core (10), of a fixed core (3) and of a coil (17), comprising a body (4) also belonging to the electromagnet and comprising an opening (23) situated at the rear of the body (4) opposite the supply orifice (18), suitable for the insertion of the flat moveable core (10), of the fixed core (3) and of the coil (17),
the solenoid valve also comprising a retaining ring (8) made of nonmagnetic material and a flat spring (9), **characterized in that** the body (4) is secured to the retaining ring (8), the retaining ring (8) being swaged onto the body (4), and **in that** the flat spring (9) is compressed between the retaining ring (8) and the flat moveable core (10).

2. Solenoid valve according to Claim 1, **characterized in that** the flat spring (9) associated with the retaining ring (8) allows the adjustment of a preload force used to seal a supply orifice (18) when the valve is in the rest position, and to do so irrespective of the adjustment of the travel of the flat moveable core (10).

3. Solenoid valve according to Claim 1 or 2, **characterized in that** the adjustment of the travel of the flat moveable core (10) is obtained when the coil (17) and the fixed core (3) are installed.

4. Solenoid valve according to any one of the preceding claims, **characterized in that** the retaining ring (8) allows the centering of the fixed core (3).

5. Solenoid valve according to any one of the preceding claims, **characterized in that** the supply orifice (18) and the usage orifice or orifices (19) are made in the bottom (4D), secured to the body (4).

6. Solenoid valve according to any one of the preceding claims, **characterized in that** the carcass (5) of the coil (17) has several bosses (33).

7. Solenoid valve according to any one of the preceding claims, **characterized in that** the poppet (12) of the solenoid valve has a polygonal shape.

8. Solenoid valve according to any one of the preceding claims, **characterized in that** the poppet (12B) of the solenoid valve is of cylindrical shape, a shoulder (34) in the flat moveable core (10D) then serving as a retainer.

9. Solenoid valve according to any one of the preceding claims, **characterized in that** the poppet (12C) of the solenoid valve has a shoulder (35).

10. Solenoid valve according to Claims 8 and 9, **characterized in that** a conical spring (36) is inserted between the shoulder (35) of the poppet (12C) and the shoulder (34) of the flat moveable core (10D).

11. Solenoid valve according to any one of the preceding claims, **characterized in that** the flat moveable core (10) and the fixed core (3) comprise, in the vicinity of the air gap, a zone of stepped shape.

12. Solenoid valve according to any one of the preceding claims, **characterized in that** the external diameter of the flat moveable core (10) is reduced so as to limit its weight and **in that** said flat moveable core (10) has a flange (28) instead of a guide shim (11) of the solenoid valve.

13. Solenoid valve according to any one of the preceding claims, **characterized in that** the external shape of the section of the body (4) is truncated over at least two opposite faces thus forming flats.

14. Solenoid valve according to any one of the preceding claims, **characterized in that** all the fluid channels (18), (19), (20) connecting the solenoid valve to the external devices are rectilinear.
